**Europäisches Patentamt**

**European Patent Office**

**Office européen des brevets**

(11) Veröffentlichungsnummer: **0 411 272 A1**

# EUROPÄISCHE PATENTANMELDUNG

(21) Anmeldenummer: **90110446.3**

(22) Anmeldetag: **01.06.90**

(51) Int. Cl.⁵: **B23K 9/26**

(30) Priorität: **06.06.89 DE 8906897 U**

(43) Veröffentlichungstag der Anmeldung:
**06.02.91 Patentblatt 91/06**

(84) Benannte Vertragsstaaten:
**DE FR GB IT SE**

(71) Anmelder: **VSE SCHWEISSTECHNIK GmbH**
**Hüttenweg 2**
**D-5982 Neuenrade(DE)**

(72) Erfinder: **Schumacher, Hans**
**Klosterweg 27**
**D-5980 Werdohl(DE)**

(74) Vertreter: **Peerbooms, Rudolf, Dipl.-Phys.**
**Postfach 200 208 Dickmannstrasse 45c**
**D-5600 Wuppertal 2(DE)**

(54) **Schutzgasschweissbrenner.**

(57) Bei einem Schutzgasschweißbrenner, der mit einer Stromführungsdüse (2) versehen ist, die von einer Schutzgasdüse (4) umschlossen ist, welche mit einer inneren, bis nahe an den Düsenmund reichenden Kühlwasserzirkulationsleitung (5) versehen ist, soll die Standzeit erhöht werden. Hierzu ist die Schutzgasdüse (4) mit einer leicht auswechselbaren, ihren Randbereich verkleidenden, stulpartigen Schutzkappe (9) aus Metall ausgerüstet, die mit einer Schweißperlen-Antihaftschicht (12) versehen ist. Die Stromführungsdüse (2) ist mit einer Stirnplatte (13) aus Keramik versehen, und der hintere Schutzgasdüsenraum (15) ist mit einer auswechselbaren Kunststoffauskleidung (16) versehen.

Fig. 1

# SCHUTZGASSCHWEISSBRENNER

Die Erfindung betrifft einen Schutzgasschweißbrenner mit einer Stromführungsdüse, die von einer Schutzgasdüse umschlossen ist, die mit einer inneren, bis nahe an den Düsenmund reichenden Kühlwasserzirkulationsleitung versehen ist.

Derartige Schutzgasschweißbrenner werden in Verbindung mit Schweißautomaten oder auch für Handbetrieb als sogenannte Schweißpistolen eingesetzt, wobei in jedem Fall ein Lichtbogen zwischen dem vorderen Drahtende und dem Werkstück erzeugt und der nachgeführte Draht zur Erzeugung der Schweißraupe abgeschmolzen wird. Bei einem solchen Lichtbogenschweißvorgang tritt oft ein starker Flug von Schweißperlen auf, die auch auf den Mündungsbereich des Schutzgasschweißbrenners auftreffen und sich dort festbrennen und mit der Zeit zunehmend anwachsen mit der Folge, daß solche Schweißbrenner schon nach wenigen Stunden Betriebszeit unbrauchbar werden oder zumindest ein Abschlagen der Schweißperlen-Anbackungen von der Stromdüse und der Schutzgasdüse verlangen. Das Freiarbeiten der Düse ist aber zeitraubend und führt zu ungewollten Unterbrechungen bei den Schweißarbeiten. Vielfach ist ein Freiarbeiten der Düsen überhaupt nicht mehr möglich, so daß Stromdüse und Schutzgasdüse ausgewechselt werden müssen, was aber wiederum mit erheblichen Kosten und Zeitaufwand verbunden ist.

Durch die DE-OS 26 31 742 ist ein Schutzgasschweißbrenner bekannt, bei welchem die Schutzgasdüse mit einer bis nahe an den Düsenmund reichenden Kühlwasserzirkulationsleitung versehen ist. Durch eine solche Kühlung wird das Anbacken von Schweißperlen reduziert und die Standzeit deutlich erhöht. Allerdings stellt eine solche wassergekühlte Schutzgasdüse ein verhältnismäßig teures Bauteil dar, weshalb dort die Erhöhung der Standzeit nur durch Inkaufnahme hoher Auswechslungskosten erreicht wird.

Der Erfindung liegt die Aufgabe zugrunde, bei gattungsgemäßen Schutzgasschweißbrennern der wassergekühlten Schutzgasdüse eine praktisch unbegrenzte Standzeit zu verleihen.

Zur Lösung dieser Aufgabe ist erfindungsgemäß vorgesehen, daß die Schutzgasdüse mit einer leicht auswechselbaren, ihren Randbereich verkleidenden, stulpartigen Schutzkappe aus Metall ausgerüstet ist, die mit einer Schweißperlen-Antihaftschicht versehen ist.

Eine solche Schutzkappe stellt ein verhältnismäßig preiswertes Austauschteil dar, welches die Schutzgasdüse vollkommen gegen Schweißperlenflug oder sonstige thermische Belastung schützt, so daß die Schutzgasdüse selbst nicht mehr, oder höchstens nach sehr langen Standzeiten, ausgewechselt werden muß.

Damit auch die mit einem Auswechseln der Schutzkappe verbundenen Stillstandzeiten möglichst selten anfallen, ist die Schutzkappe mit einer Schweißperlen-Antihaftschicht versehen, die gemäß weiteren Merkmalen der Erfindung entweder auch einem mit Glimmerpulver und/oder Oxidpulver, z.B. Aluminiumpulver, dosiertem PTFE-, FEP- oder PFA-Material oder aus einer mit Bor oder Phosphor versetzten, chemisch aufgetragenen Nickelschicht bestehen kann. Durch diese Maßnahmen wird die Standzeit der Schutzkappe wesentlich erhöht. Zu dem gleichen Zweck kann in Weiterbildung der Erfindung vorgesehen werden, daß die Kühlwasserzirkulationsleitung bis in den von der Schutzkappe verkleideten Randbereich der Schutzgasdüse hineinragt, so daß auch die Schutzkappe ihrerseits eine Kühlung erfährt.

Die Schutzkappe ist vorzugsweise klemmend an der Schutzgasdüse gehalten, so daß sie im Bedarfsfall rasch ausgewechselt werden kann.

Der Erfindung liegt ferner die Aufgabe zugrunde, bei einem gattungsgemäßen Schutzgasschweißbrenner auch die Standzeit der Stromführungsdüse zu erhöhen. Zu diesem Zweck ist der Erfindung zufolge vorgesehen, daß an der Stirnseite der Stromführungsdüse eine Stirnplatte aus Keramik, beispielsweise Aluminiumoxid, befestigt ist, die ebenfalls mit einer Schweißperlen-Antihaftschicht der vorgenannnten Art versehen ist.

Nach weiteren Merkmalen der Erfindung kann vorgesehen werden, daß der hintere Schutzgasdüsenraum durch einen stulpartigen Körper aus hitzebeständigem, schweißperlenabweisendem Kunststoff ausgekleidet ist, welcher bis an die Schutzkappe und an das vordere Ende des Düsenstockes ragt und mit Durchlaßöffnungen für das Schutzgas versehen ist. Durch diese Kunststoffaus kleidung wird sichergestellt, daß durch Schweißperlen, die sich mit der Zeit auch im hinteren Bereich des Schutzgasdüsenraumes absetzen können, kein Kurzschluß zwischen Stromführungsdüse und Schutzgasdüse herbeigeführt wird. Die Durchlaßöffnungen bestehen der Erfindung zufolge vorteilhafterweise aus ein enges Gitter für Schweißperlen bildenden Schlitzen, die ein Eindringen von Schweißperlen bis in die Schutzgaszuführungskanäle verhindern. Auch dieser stulpartige Auskleidungskörper ist der Erfindung zufolge auswechselbar.

Die Erfindung wird im folgenden anhand eines in der Zeichnung dargestellten Ausführungsbeispieles näher beschrieben. In der Zeichnung zeigen:

Fig. 1 einen Schutzgasschweißbrenner nach der Erfindung, teils in Ansicht, teils im axialen Längsschnitt,

Fig. 2 eine zugeordnete Schutzkappe, teils in Draufsicht, teils in axialem Längsschnitt,

Fig. 3 einen zugeordneten Auskleidungskörper, teils in Draufsicht, teils im axialen Längsschnitt und

Fig. 4 den Auskleidungsköroer nach Fig. 3, teils in Draufsicht, teils in einem Schnitt gemäß der Linie IV-IV in Fig. 3.

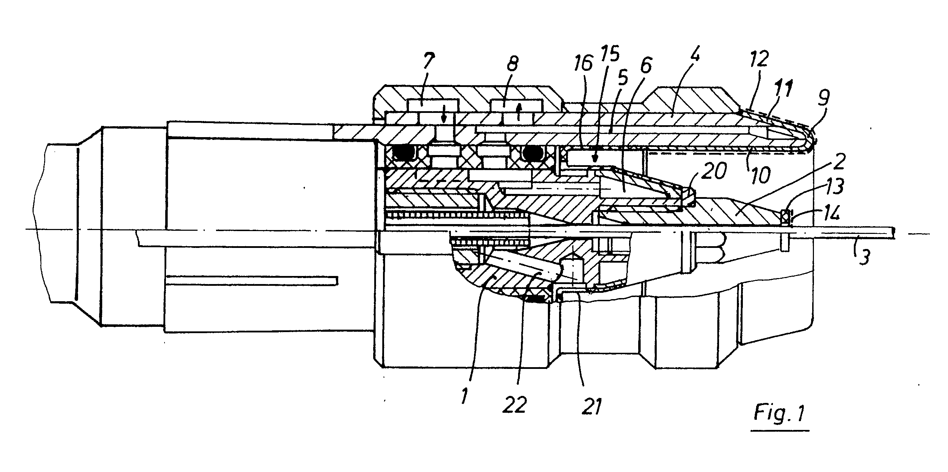

Der Schutzgasschweißbrenner besitzt eine auswechselbar in einen Düsenstock 1 eingeschraubte Stromführungsdüse 2 zur Zuführung des Schweißdrahtes 3 und eine Schutzgasdüse 4, die mit einer bis zu ihrem vorderen Rand reichenden Kühlwasserzirkulationsleitung 5 versehen ist. Der Düsenstock 1 ist ebenfalls mit einer Kühlwasserzirkulationsleitung 6 versehen, die bis in den die eingeschraubte Stromführungsdüse 2 aufnehmenden Bereich des Düsenstockes 1 hineinragt. Das Kühlwasser wird beiden, in Reihe geschalteten Zirkulationskreisen über einen äußeren Kanal 7 zugeführt und über einen äußeren Kanal 8 abgeführt. Die Kühlwasserleitungen sind in Fig. 1 nicht vollständig in ihrem Verlauf gezeigt, da ihre spezielle Ausbildung für die vorliegende Erfindung ohne Bedeutung ist. Statt von außen her kann die Kühlwasserzufuhr und -ableitung auch von innen her erfolgen, was sich insbesondere bei mit einer Stromkabelkühlung versehenen Schutzgasschweißbrennern empfiehlt.

Der Erfindung zufolge ist die Schutzgasdüse 4 an ihrem vorderen Randbereich mit einer aufgeklemmten, leicht auswechselbaren Metall-Schutzkappe 9 versehen, die stulpartig ausgebildet ist und aus einem inneren Mantel 10 und einem äußeren, kegeligen Mantel 11 besteht, welche die Schutzgasdüse 4 zwischen sich einfassen. Die Kühlwasserzirkulationsleitung 5 ragt bis in den von der Schutzkappe 9 umschlossenen Bereich der Schutzgasdüse 4 hinein, so daß auch die Kappe 9 eine Kühlung erfährt. Die Schutzkappe 9 ist an ihrer Außenseite mit einer gestrichelt angedeuteten Schweißperlen-Antihaftschicht 12 versehen, die vorzugsweise aus einer chemisch aufgebrachten Nikkelschicht besteht, die mit Bor oder Phosphor versetzt ist.

An der Stirnseite der Stromführungsdüse 2 ist eine Keramikplatte 13 befestigt, die ebenfalls mit einer Schweißperlen-Antihaftschicht 14 versehen ist.

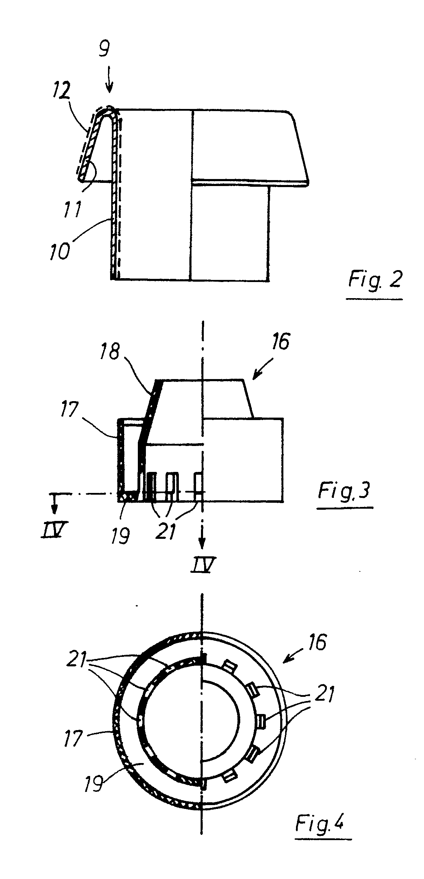

Der hintere Raum 15 der Schutzgasdüse ist mit einem aus Kunststoff bestehenden stulpartigen Körper 16 ausgekleidet, vgl. auch die Fig. 3 und 4, welcher einen äußeren Mantel 17, einen inneren Mantel 18 und einen Boden 19 umfaßt. Der äußere Mantel 17 liegt an der Schutzgasdüse 4 an und ragt bis an die Schutzgaskappe 9 heran. Der innere Mantel 18 verkleidet den Düsenstock 1 und ragt bis an dessen vorderes Ende heran, wo er sich auf einem in die Düse 2 eingelassenen Stützring 20 abstützt. An dem Eckbereich zwischen Boden 19 und innerem Mantel 18 ist der Auskleidungskörper 16 mit einem Kranz von Durchlaßöffnungen 21 für das über den Kanal 22 zugeführte Schutzgas versehen. Die Durchlaßöffnungen 21 sind als enge Schlitze ausgebildet, die ein Gitter für evtl. bis dort hin gelangende Schweißperlen bilden. Nach Ausschrauben der Stromführungsdüse 2 ist auch dieser Auskleidungskörper 16 erforderlichenfalls ausbaubar und durch einen neuen ersetzbar.

Bezugszeichenliste

1 Düsenstock
2 Stromführungsdüse
3 Schweißdraht
4 Schutzgasdüse
5 Zirkulationsleitung
6 Zirkulationsleitung
7 Kanal
8 Kanal
9 Schutzkappe
10 Mantel
11 Mantel
12 Antihaftschicht
13 Keramikplatte
14 Antihaftschicht
15 Raum
16 Auskleidungskörper
17 Mantel
18 Mantel
19 Boden
20 Stützring
21 Durchlaßöffnung
22 Kanal

**Ansprüche**

1. Schutzgasschweißbrenner mit einer Stromführungsdüse (2), die von einer Schutzgasdüse (4) umschlossen ist, die mit einer inneren, bis nahe an den Düsenmund reichenden Kühlwasserzirkulationsleitung (5) versehen ist, dadurch gekennzeichnet, daß die Schutzgasdüse (4) mit einer leicht auswechselbaren, ihren Randbereich verkleidenden, stulpartigen Schutzkappe (9) aus Metall ausgerüstet ist, die mit einer Schweißperlen-Antihaftschicht (12) versehen ist.

2. Schutzgasschweißbrenner nach Anspruch 1, dadurch gekennzeichnet, daß die Antihaftschicht (12) entweder aus einem mit Glimmerpulver und/oder Oxidpulver, z.B. Aluminiumoxidpulver, dosiertem PTFE-,FEP- oder PFA-Material oder aus einer mit Bor oder Phosphor versetzten, chemisch aufgetragenen Nickelschicht besteht.

3. Schutzgasschweißbrenner nach den Ansprüchen 1 oder 2, dadurch gekennzeichnet, daß die Kühlwasserzirkulationsleitung (5) bis in den von der Schutzkappe (9) verkleideten Randbereich der Schutzgasdüse (4) hineinragt.

4. Schutzgasschweißbrenner nach einem der Ansprüche 1 bis 3, dadurch gekennzeichnet, daß die Schutzkappe (9) klemmend an der Schutzgasdüse (4) gehalten ist.

5. Schutzgasschweißbrenner nach einem oder mehreren der Ansprüche 1 bis 4, dadurch gekennzeichnet, daß an der Stirnseite der Stromführungsdüse (2) eine Stirnplatte (13) aus Keramik, z.B. Aluminiumoxid, befestigt ist, die ebenfalls mit einer Schweißperlen-Antihaftschicht (14) der vorgenannten Art versehen ist.

6. Schutzgasschweißbrenner nach einem oder mehreren der Ansprüche 1 bis 5, dadurch gekennzeichnet, daß der hintere Schutzgasdüsenraum (15) durch einen stulpartigen Körper (16) aus hitzebeständigem, schweißperlenabweisendem Kunststoff ausgekleidet ist, welcher bis an die Schutzkappe (9) und bis an das vordere Ende des Düsenstockes (1) reicht und der mit Durchlaßöffnungen (21) für das Schutzgas versehen ist.

7. Schutzgasschweißbrenner nach Anspruch 6, dadurch gekennzeichnet, daß die Durchlaßöffnungen (21) aus ein enges Gitter für Schweißperlen bildenden Schlitzen besteht, die in dem Eckbereich zwischen Boden (19) und innerem Mantel (18) des stulpartigen Körpers (16) ausgebildet ist.

8. Schutzgasschweißbrenner nach den Ansprüchen 7 oder 8, dadurch gekennzeichnet, daß der stulpartige Körper (16) auswechselbar ist.

9. Schutzgasschweißbrenner nach Anspruch 5, dadurch gekennzeichnet, daß der Stromführungsdüse (2) eine Kühlwasserzirkulationsleitung (6) zugeordnet ist, die den Einschraubbereich der Stromführungsdüse (2) umschließt.

Fig.1

*Fig. 2*

*Fig. 3*

*Fig. 4*

# EUROPÄISCHER RECHERCHENBERICHT

**EP 90110446.3**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | US - A - 3 690 567 (BORNEMAN) * Fig. 1-11 * | 1,4 | B 23 K 9/26 |
| A | DD - A - 80 613 (PISSAREK) * Fig. * | 1 | |
| A | AT - B - 364 757 (ELIN-UNION) * Fig. * | 1 | |
| A | DE - A1 - 3 203 789 (SINTEC) * Skizze 1 * | 5 | |
| A | US - A - 4 309 590 (STOL) * Fig. 3 * | 3,9 | |
| A | US - A - 2 943 183 (SIMMS) * Fig. 4 * | 5,6,9 | **RECHERCHIERTE SACHGEBIETE (Int Cl⁵)** |
| A | FR - A - 2 503 606 (PRUNIER) * Fig. * | 6 | B 23 K 9/00 |

Der vorliegende Recherchenbericht wurde für alle Patentansprüche erstellt.

| Recherchenort | Abschlußdatum der Recherche | Prüfer |
|---|---|---|
| WIEN | 26-11-1990 | BENCZE |

Europäisches Patentamt